# EUROPEAN PATENT APPLICATION

(11) **EP 2 253 504 A1**
(43) Date of publication of application: **24.11.2010**
(21) Application number: 09160764.8
(22) Date of filing: 20.05.2009
(51) Int. Cl.: B60N 2/30

(54) **Foldable seat arrangement**

(71) Applicant: Autoliv Development AB, 447 83 Vårgårda (SE)
(72) Inventor: Andréasson, Claes, 281 40 Hässleholm (SE)
(74) Representative: Friberg, Ingvar

(57) **Abstract**

A foldable seat arrangement (1) for a motor vehicle which seat arrangement comprises a squab structure (2) and a backrest structure (3). These structures (2, 3) are pivotally connected to each other by a connection arrangement (4) comprising at least one first bracket (5). The backrest structure is pivotally connected to a chassis structure. The backrest structure is provided with at least one stop (12), which is arranged to engage with an abutment structure (13) on the first bracket (5) during a raising operation of the squab structure (2) and the backrest structure (3), respectively. The stop (12) and the abutment structure (13) are adapted to allow a raising operation of the backrest of an angle α before the stop and the abutment structure engages so as to induce a movement of the squab structure.

## Description

### TECHNICAL FIELD

The present invention relates to a foldable seat arrangement according to the preamble of claim 1.

### BACKGROUND ART

Many estate vehicles are configured with seat arrangements which are foldable from an operative position to a stored position, wherein the back surface of the backrest of the seats becomes substantially parallel or flush with the rest of the floor of the vehicle, to provide a load-carrying platform which can be used as an extended cargo or storage compartment.

Multiple seat arrangements are known which can be folded to a stored position, wherein the back surface of the backrest becomes substantially parallel or flush with the rest of the floor of the vehicle. A problem with these seat arrangements are that they need a lot of components which make the seat arrangements expensive to manufacture and heavy to handle during e.g. during raising to a operable position, mounting in the vehicle etc.

One example of such a seat arrangement is described in EP 1193112 which discloses a squab and a backrest which are connected to each other in such a way that when the backrest is raised or lowered, the squab is moved accordingly. Thus the squab and the backrest are connected in a direct relationship with each other. A general problem with these kind of arrangements is that there is a desire that the seat shall be robust and safe enough when it is raised to an operable position, such that the safety for a passenger sitting in the chair is satisfied, while there is also a desire for providing an arrangement which is light and may smoothly be changed between the storage position and the operable position. Thus, the safety requirements often implies that the chair is constructed such that the chair is rather heavy and may not easily be switched between the operable and storage positions.

It is an object of the present invention to provide an improved seat arrangement intended to solve the above mentioned problems of the known seat arrangements.

### SUMMARY OF THE INVENTION

According to a preferred embodiment, the present invention relates to a foldable seat arrangement for a motor vehicle. The seat arrangement comprises a squab structure and a backrest structure. The foldable seat arrangement is arranged to be able to switch between a first stored position, wherein the seat arrangement is folded to a compact, non-spatious configuration, and a second operative position, wherein said foldable seat arrangement is unfolded to provide a seat for a passenger. In the first stored position the seat arrangement structure may be folded such that it essentially not is occupying any of the inner compartment where it is located, e.g. the seat arrangement may be folded such that the back surface of the backrest becomes substantially parallel or flush with the rest of a floor of the vehicle to form part of the same while the rest of the seat arrangement is hidden in the floor below the backrest. The squab structure and backrest structure are pivotally connected to each other by a connection arrangement comprising at least one first bracket. Furthermore, the backrest structure is, directly or indirectly, pivotally connected to a chassis structure. During a folding or raising operation is the backrest structure turned relatively the squab structure at the pivotal connection. The backrest structure is provided with at least one stop, which is arranged to engage with an abutment structure on the first bracket during a raising operation of the squab structure and the backrest structure, respectively. The stop and the abutment structure are adapted to allow a raising operation of the backrest corresponding to a rotational movement of the backrest relatively the squab of an angle α before the stop and the abutment structure engages so as to induce a movement of the squab structure. Hence, this construction will solve the problem that the seat arrangement is too heavy to be easily raised from a stored position to an operable position due to the fact that during the first part of the raising operation, which usually is the heaviest due to the moment of inertia, there will be less moment of inertia since only the backrest is set in motion while in a common foldable seat both the squab and the backrest shall be set in motion at the same time. In addition, during the start and first part of a raising operation of the chair, the person performing the operation often has to be positioned in an inconvenient way, e.g sitting or bending over, such that it is hard to conveniently pull the seat with sufficient forces. Thus, the present invention reduces the forces needed in raising the chair during the normally most heavy and inconvenient phase of operation, i.e at the start of the raising of the chair.

The abutment structure comprises a first portion and a second portion, which second portion is formed of a protrusion from the first portion. The stop is arranged to engage with the second portion and, optionally, the first portion during raising of the backrest structure and to engage with the first portion during lowering of the backrest structure. Furthermore, the squab structure and backrest structure are arranged to move simultaneously from the moment when the stop engages with the second portion during raising and the first portion during lowering.

The first bracket of the connection arrangement can be elongated and pivotally connected in a first end to the backrest structure and the chassis structure. A second end of the first bracket can be pivotally connected to the squab structure.

The connection arrangement can comprise at least a second bracket, which can be pivotally connected to the squab structure and the chassis structure. The second bracket can be arranged to abut against a chassis member in the raised position for the seat arrangement.

The second bracket of the connection arrangement can comprise a protrusion or a cavity, which is arranged to engage with a corresponding cavity or protrusion of the chassis member to arrest the seat arrangement in the raised position. The connection arrangement can preferably comprise two such brackets.

When the foldable seat arrangement is switched between the second operative position, i.e. a fully raised position, and the first stored position, the abutment structure of the first bracket and the stop of the backrest structure can be shaped such that the backrest structure is allowed to be turned a distance corresponding to a rotational movement of the backrest relatively the squab of an angle β before the stop and the abutment structure engages in order to induce a movement of the squab structure so as to be simultaneously lowered together with the backrest structure.

The foldable seat arrangement can preferably comprise two connection arrangements.

A locking mechanism can be provided which is arranged to lock the backrest structure in the fully raised position. Likewise, a locking mechanism may be provided to lock the seat arrangement in the folded position.

### BRIEF DESCRIPTION OF THE DRAWINGS

The invention will be described in detail with reference to the attached figures. It is to be understood that the drawings are designed solely for the purpose of illustration and are not intended as a definition of the limits of the invention, for which reference should be made to the appended claims. It should further be understood that the drawings are not necessarily drawn to scale and that, unless indicated, they are merely intended to schematically illustrate the structures and procedures described herein.
- Fig. 1: shows a side view of the foldable seat arrangement according to the invention, in a stored position;
- Fig. 2: shows a side view of the foldable seat arrangement, in a partially raised position;
- Fig. 3: shows a side view of the foldable seat arrangement, in a raised position;
- Fig. 4: shows a side view of the foldable seat arrangement, in a partially lowered position;
- Fig. 5A: shows a side view of the foldable seat arrangement according to an alternative embodiment of the invention, in a stored position;
- Fig. 5B: shows a side view of the foldable seat arrangement according to an alternative embodiment of the invention, in a partially raised position;
- Fig. 5C: shows a side view of the foldable seat arrangement according to an alternative embodiment of the invention, in a fully raised position;
- Fig. 5D: shows a side view of the foldable seat arrangement according to an alternative embodiment of the invention, in a partially lowered position; and
- Fig. 6: shows a side view of the foldable seat arrangement according to a further alternate embodiment of the invention, wherein backrest structure is allowed to be angled before the squab structure is activated.

### DETAILED DESCRIPTION

In the description below, various directions will be given with reference to a vehicle oriented in a forward driving direction. Example of such directions can be forward, rear, up, down etc.

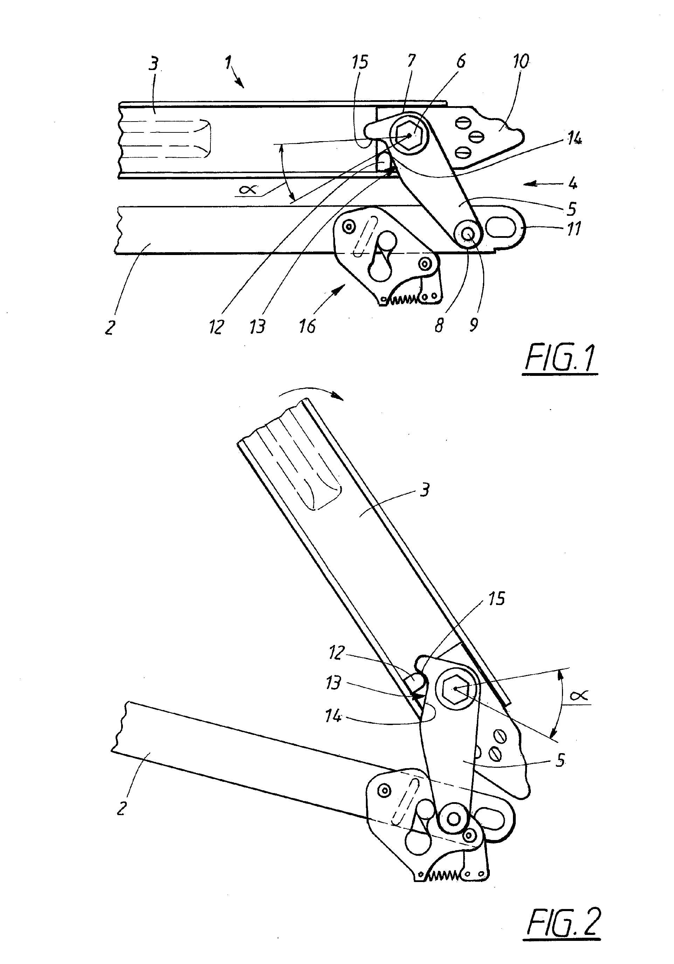

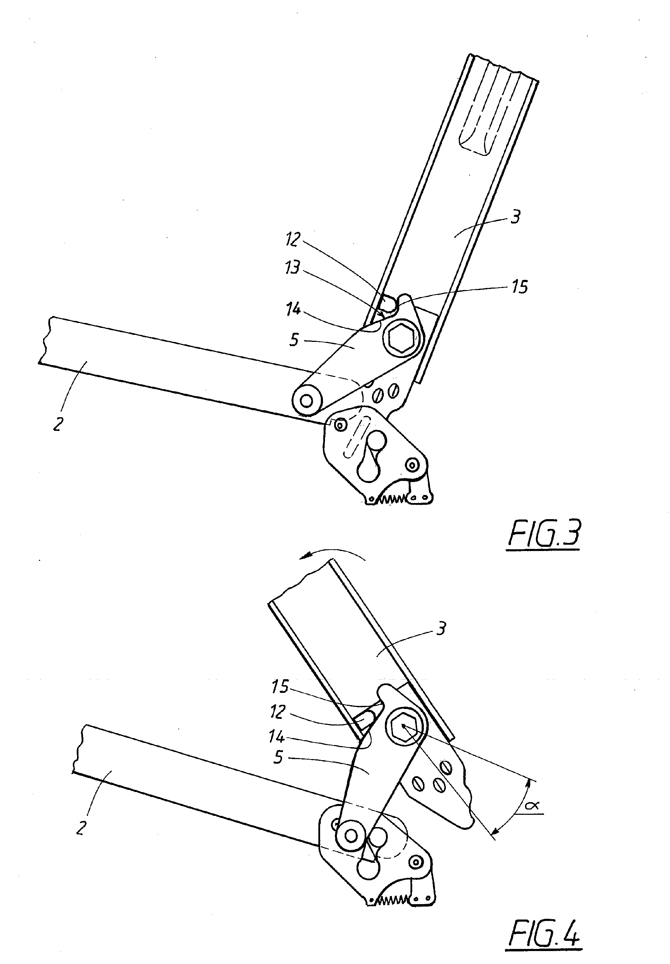

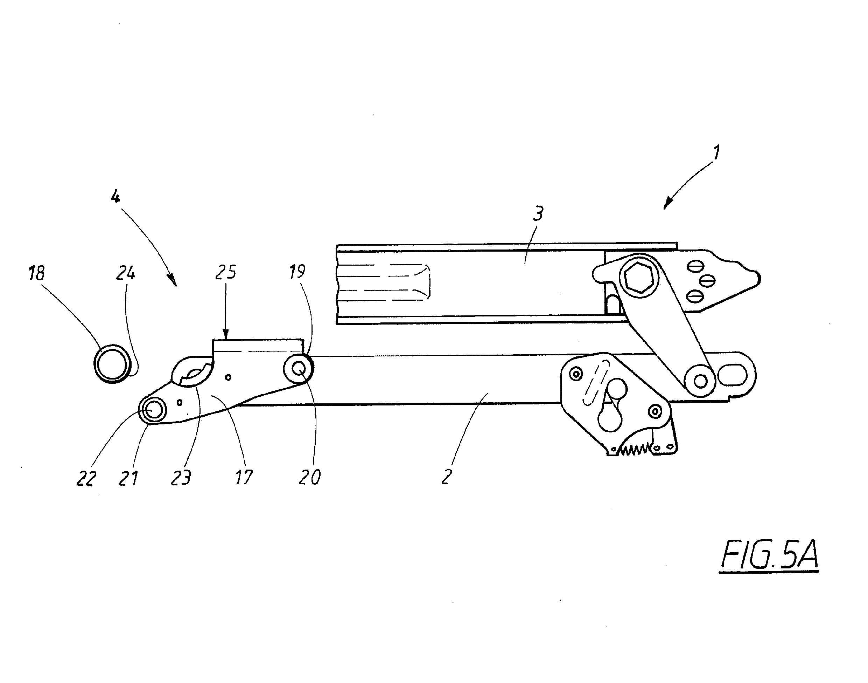

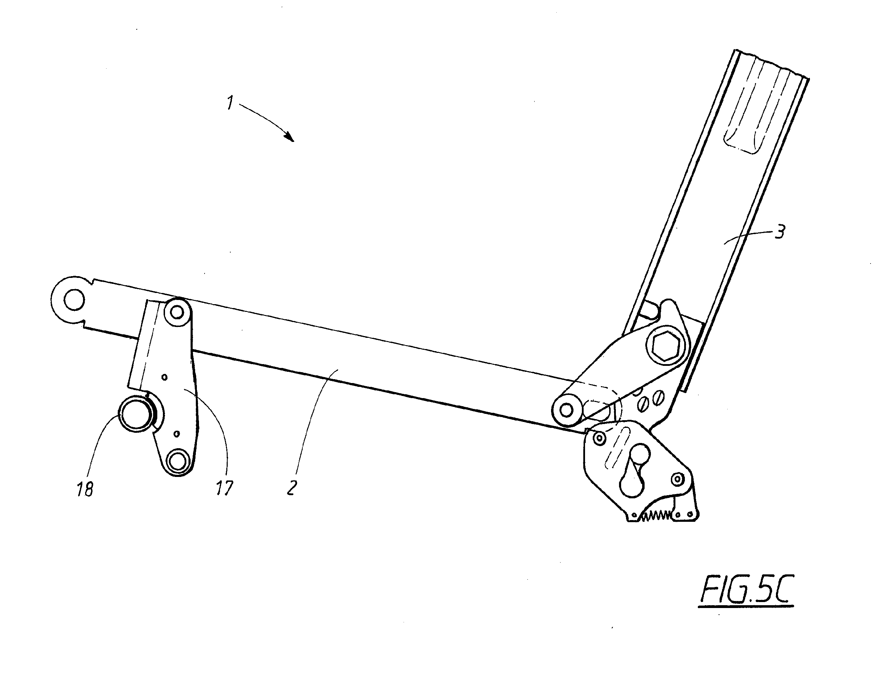

Fig. 1-6 shows side views of a foldable seat arrangement 1 for a motor vehicle according to the invention. The foldable seat arrangement 1 comprises a squab structure 2 and a backrest structure 3. Both the squab structure 2 and the backrest structure 3 are movable from a stored or folded position, shown in Fig. 1 and 5A, wherein both the structures 2, 3 are substantially parallel or flush with the floor of the vehicle, to an operable or raised position, shown in Fig. 3 and 5C. This foldable seat arrangement 1 of the invention is mainly intended to be used for seats placed on the second and subsequent rows of seats in e.g. estate vehicles.

Upholsteries are preferably arranged on the squab structure 2 and the backrest structure 3. The backrest structure 3 and the squab structure 2 are pivotally connected to each other by a connection arrangement 4. The connection arrangement 4 comprises at least one first bracket 5. The connection arrangement 4 can also preferably comprise two first brackets, one first bracket 5 and connection arrangement 4 arranged on each side of the foldable seat arrangement 1.

The first bracket 5 is elongated and pivotally connected in a first pivot point 6 in a first end 7 to the backrest structure 3 and the chassis structure (not shown). A second end 8 of the first bracket 5 is pivotally connected in a second pivot point 9 to the squab structure 2. The first bracket 5 is preferably connected to a first end 10 of the backrest structure and a first end 11 of the squab structure 2. The first bracket 5 can also be designed as a linkage with several pivotally connected links.

The backrest structure 3 is provided with at least one stop 12, which is arranged to engage with an abutment structure 13 on the first bracket 5 during a raising operation for the squab structure 2 and the backrest structure 3, respectively. The stop 12 and abutment structure 13 are adapted to allow a raising operation of the backrest structure 3 of an angle α before the stop 12 and the engagement structure 13 engages so as to induce a movement of the squab structure 2.

Another way to express this is that the stop 12 and the abutment structure 13 are arranged such that they do not come into an engaging relation until the backrest structure 3 has been rotated an angle α, when raising the backrest structure 3 from its folded position, such that only the backrest structure 3 is turned during a first turning of the backrest structure 3 and during the following turning, when the backrest structure 3 has turned the angle α, the turning will cause the squab structure 2 to move due to the engagement of the stop 12 and the abutment structure 13.

The stop 12 is preferably chamfered on a part which interacts with the abutment structure 13, to achieve a uniform and continuous movement during raising and lowering. The angle α can be in the interval of 5-60 degrees, with reference to the first bracket. The angles α in the lower part of the interval can be chosen for e.g. small and lightweight vehicle seats, since here the moment of inertia becomes relatively small in the beginning of the raising operation, even if both the squab and backrest structure 2, 3 are turned simultaneously. In addition, if there is a rather large force needed in order to move the squab to the desired end position it may be advantageous to only allow a rather short turning angle (α) to be used before the stop 12 and the abutment structure 13 are engaged since the force for moving the squab will distributed on a longer upfolding motion (distance) and thus less force/distance will be needed in order to move the backrest after the engagement than if a relatively large (α) is used. The angles in the upper part of the interval can be chosen when it can not be accepted with a high moment of inertia in the beginning of the raising operation, for e.g. large and heavy seats, since here the moment of inertia becomes relatively large in the beginning of the raising operation even if only the backrest structure 3 is turned, and the moment of inertia becomes even larger if both the squab and backrest structure 2, 3 are turned at the same time. Hence, the value of α is preferably chosen such that the raising of the backrest structure 3 may be performed without undesirable large force needed neither in the first phase of the raising operation, due to a too early engagement of the stop 12 and the abutment structure 13, i.e. a small alpha, while there also should be a sufficient distance to perform a turning movement of the backrest during the second raising phase while the stop 12 and the abutment structure 13 are engaged such that the raising operation not will be too heavy due to a short turning distance requiring the sufficient total force corresponding to the load for raising both the squab structure 2 and the backrest structure 3.

The stop 12 is arranged to engage with the second portion 15 during raising of the backrest structure 3 when the raising of the backrest structure 3 is intended to cause the squab structure 2 to move, i.e. during the second phase of the raising operation when the backrest structure 3 already has been turned an angle α relatively the squab structure 2 from its first storing position. Optionally, the stop 12 may be guided and supported by the first portion during a part of or the complete rotational, raising movement. During lowering of the seat arrangement 1 from its second operative (raised) position, the squab structure 2 will be moved during the turning motion when the stop 12 is engaged with the first portion 14. During this lowering or folding operation, the backrest structure 3 may be moved a distance corresponding to a rotational movement of the backrest 3 relatively the squab 2 of an angle α from its second operative (raised) position before the stop and the abutment structure engages whereby a continued movement of the backrest 3 induces a motion of the squab structure 2 so as to be simultaneously lowered together with the backrest structure 3.

Further, the foldable seat arrangement 1 comprises a locking mechanism 16 which is arranged to partially or fully lock the seat arrangement 1 in the raised position, shown in Fig. 3. The locking mechanism 16 is attached to the chassis and is designed to engage with the first end 10 of the backrest structure 3, in the operable position.

Fig. 1-3 shows the raising of the foldable seat arrangement 1, from a stored position to a fully raised position, and Fig. 4 shows the foldable seat arrangement 1 in a partially lowered position, turned in a direction towards a stored position. The raising of the seat arrangement 1 will be done in two different sequences. At raising the user will start in the position shown in Fig. 1 and grab hold of the backrest structure 3 and rotate only this structure backwards in a direction towards the rear of the vehicle (if the seat is intended to be facing the forward direction as a common seat). When this is done the stop 12 will engage with the first portion 14 of the abutment structure 13, until the backrest structure 3 has rotated an angle α relative the first bracket 5. This rotational movement is defined as the first sequence.

The second sequence of the raising, shown in Fig. 2, will take place when the stop 12 has reached a position when the stop 12 can engage with the second portion 15 of the abutment structure 13. This is achieved when the backrest structure 3 has been rotated more than the angle α and the stop 12 engages with the second portion 15 of the abutment structure 13. When this abutment between these two parts has taken place, the squab structure 2 will start to rotate together with the backrest structure 3 simultaneously, until the raised position shown in Fig. 3 is reached. This can also be described as that the rotation of the squab structure 2 is not started until a predetermined rotation of the backrest structure 3 is achieved and then the squab and backrest structure 2, 3 moves simultaneously. This delayed movement of the squab structure 2 is perceived as robust by the user and demands less applied force during the raising operation, compared to conventional foldable seats which raise both the seat and the backrest simultaneously from the beginning. With this delayed movement the moment of inertia of the seat arrangement 1 is less in the start of the raising operation compared to a seat which raises both the seat and the backrest at the same time.

When the second sequence of the raising has begun, the first bracket 5 rotates clockwise together with the squab and backrest structure 2 ,3 until the operable and raised position has been reached, shown in Fig. 3.

The lowering or folding operation can also be divided into two sequences, a first lowering (or folding) sequence and a second lowering sequence. During the first lowering sequence, which is from the second, raised position to a semifolded position, corresponding to the turning movement of the backrest 3 of an angle α with respect to the squab structure 2, is only the backrest structure 3 moved. When the backrest structure 3 has turned an angle corresponding to α, the stop 12 will start to engage with first portion 14 of the bracket 5. From this point starts the second lowering sequence. The engagement will induce a motion of the squab structure 2 when the backrest structure 3 is forced further in the same direction.

Fig. 5A-5D shows a side view of the foldable seat arrangement 1 according to an embodiment of the invention. Fig. 5A-5D are corresponding to the above described foldable seat arrangement and the raising and lowering will take place in the same manner as described with reference to Fig. 1-4, with the exception that Fig. 5A-5D discloses the connection arrangement which comprises at least an additional second bracket 17 which is arranged to abut against a chassis member 18 when the seat arrangement 1 is in the operable and raised position. A preferred design of the connection arrangement 4 comprises two second brackets, provided on either side of the squab structure 2.

The second bracket 17 is pivotally connected to the squab structure 2 and the chassis structure. A third end 19 of the second bracket 17 has a third pivot point 20 which is connected to the squab structure 2, and a fourth end 21 of the second bracket 17 has a fourth pivot point 22 which is connected to the chassis structure (not shown).

The second bracket 17 comprises a cavity 23, which is arranged to engage with a corresponding protrusion 24 of the chassis member 18, this to arrest the foldable seat arrangement 1 in the operable position, shown in Fig. 5C. Another alternative is that the second bracket 17 is provided with a protrusion and the chassis member 18 is provided with a corresponding cavity. The cavity or the protrusion of the second bracket 17 is preferably provided on a frontal side 25.

Fig. 5A shows the foldable seat arrangement 1 in the folded position, wherein the squab structure 2 and the backrest structure 3 are parallel with each other. In this folded position the second bracket 17 is passive and not in contact with the abutment provided on the chassis member 18.

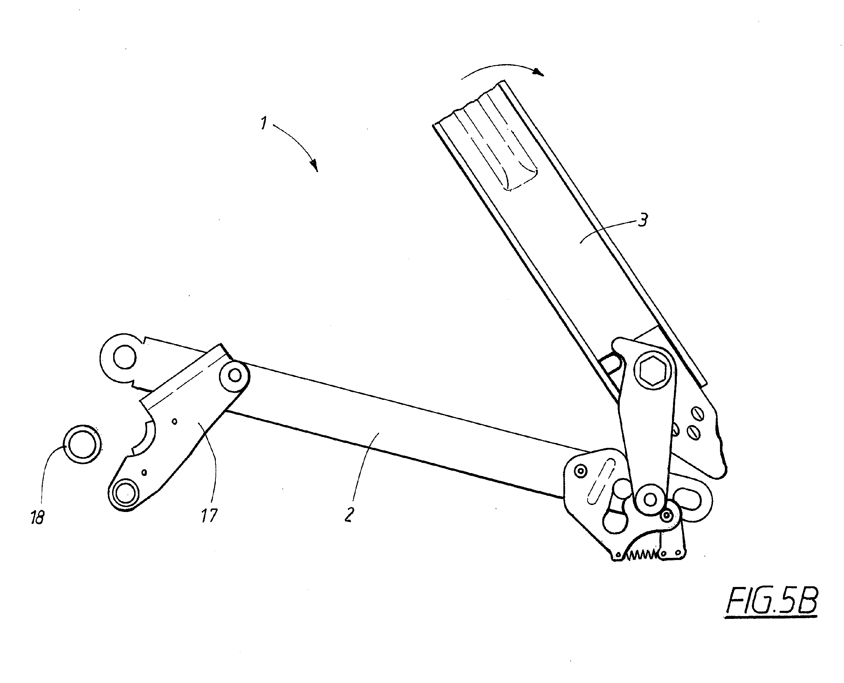

Fig. 5B shows the foldable seat arrangement 1 in a partially raised position, wherein the backrest structure 3 has started to rotate together with the squab structure 2. In this partially raised position the second bracket 17 is passive and not in contact with the abutment provided on the chassis member 18.

Fig. 5C shows the foldable seat arrangement 1 in a fully raised position, wherein the second bracket 17 is active and in contact with the abutment provided on the chassis member 18. Thus, when the second bracket 17 is in contact with the abutment of the chassis member 18, the foldable seat arrangement 1 has reached its operable position or fully raised position. Thus, when the second bracket 17 is in contact with the abutment of the chassis member it provides an end position for the foldable seat structure 1.

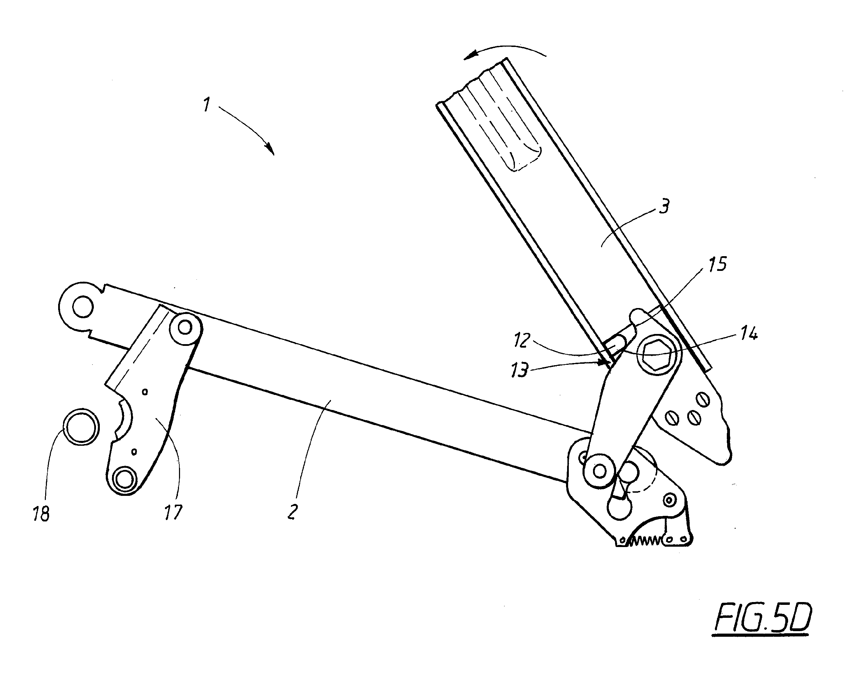

Fig. 5D shows the foldable seat arrangement 1 in a partially lowered position, wherein the backrest structure 3 has started to rotate together with the squab structure 2 towards the stored position. Thus, the second bracket 17 is passive and not in contact with the abutment provided on the chassis member 18.

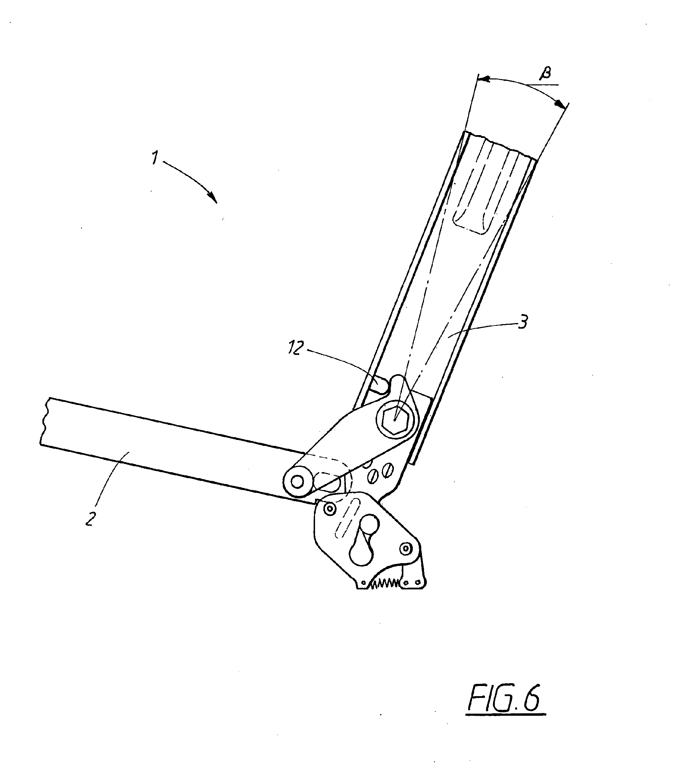

The foldable seat arrangement 1 and its abutment structure 13 can be designed such that the stop 12 of the backrest structure 3 can be angled an angle β, shown in Fig. 6, before the squab structure 2 is allowed to be activated to be simultaneously lowered together with the backrest structure 3. Thus, the backrest structure 3 can be non-rigid and allowed to flex the angle β forwards and backwards due to the comfort of the user, without the foldable seat arrangement 1 has to be put into a counter clockwise rotational movement towards the folded position. The total angle β can preferably be set in the interval 20-40 degrees.

The above described different features can be combined without departing from the scope of the invention. Further, the invention is not restricted to the content of the appended claims, but may be varied within the scope of the claims.

## Claims

1. A foldable seat arrangement (1) for a motor vehicle, which foldable seat arrangement (1) comprises a squab structure (2) and a backrest structure (3) and wherein said foldable seat arrangement (1) is arranged to be able to switch between a first stored position, wherein the back surface of a backrest (3) of the foldable seat arrangement (1) becomes substantially parallel or flush with the rest of a floor of the vehicle, and a second operative position, wherein said foldable seat arrangement (3) is unfolded to provide a seat for a passenger, which squab structure (2) and backrest structure (3) are pivotally connected to each other by a connection arrangement (4) comprising at least one first bracket (5), the backrest structure (3) further being pivotally connected to a chassis structure **characterized in that** the backrest structure (3) is provided with at least one stop (12), which is arranged to engage with an abutment structure (13) on the first bracket (5) during an raising operation of the squab structure (2) and the backrest structure (3), respectively, wherein the stop (12) and the abutment structure (13) are adapted to allow a raising operation of the backrest structure (3) of an angle α before the stop (12) and the abutment structure (13) engages so as to induce an movement of the squab structure (2).

2. Foldable seat arrangement according to claim 1, **characterized in that** the abutment structure (13) comprises a first portion (14) and a second portion (15), which second portion is formed of a protrusion from the first portion (14), wherein the stop (12) is arranged to engage with the second portion (15) during raising of the backrest structure (3) and to engage with the first portion (14) during lowering of the backrest structure (3), the squab structure (2) and backrest structure (3) are arranged to move simultaneously from the moment when the stop (12) engages with the second portion (15) during raising and the first portion (14) during lowering.

3. Foldable seat arrangement according to claim 1 or 2, **characterized in that** the first bracket (5) of the connection arrangement (4) is elongated and pivotally connected in a first end (7) to the backrest structure (3) and the chassis structure, and a second end (8) of the first bracket (5) is pivotally connected to the squab structure (2).

4. Foldable seat arrangement according to any of claims 1-3, **characterized in that** the connection arrangement (4) comprises at least a second bracket (17), which is pivotally connected to the squab structure (2) and the chassis structure (3), which second bracket (17) is arranged to abut against a chassis member (18) in the raised position for the foldable seat arrangement (1).

5. Foldable seat arrangement according to claim 4, **characterized in that** the second bracket (17) of the connection arrangement (4) comprises a cavity (23), which is arranged to engage with a corresponding protrusion (24) of the chassis member to arrest the foldable seat arrangement (1) in the raised position.

6. Foldable seat arrangement according to claims 4 or 5, **characterized in that** the connection arrangement (4) comprises two second brackets (17).

7. Foldable seat arrangement according to claim 1 or 2, **characterized in that** the abutment structure (13) of the connection arrangement (4) and the stop (12) of the backrest structure (3) are shaped such that the backrest structure (3) is allowed to be angled an angle β before the squab structure (2) is activated to be simultaneously lowered together with the backrest structure (3).

8. Foldable seat arrangement according to claim 1, **characterized in that** the foldable seat arrangement (1) comprises two connection arrangements (4).

9. Foldable seat arrangement according to claim 1, **characterized in that** a locking mechanism (16) is provided which is arranged to lock the backrest structure (3) in the fully raised position.

10. A vehicle comprising a foldable seat arrangement according to any one of the claims 1-9.
